# EUROPEAN PATENT SPECIFICATION

(11) **EP 3 505 895 B1**
(45) Date of publication and mention of the grant of the patent: **05.05.2021**
(21) Application number: 17843548.3
(22) Date of filing: 22.08.2017
(51) Int. Cl.: G01L 9/00

(54) **STRAIN SENSOR**
DEHNUNGSSENSOR
CAPTEUR DE CONTRAINTE

(30) Priority: 23.08.2016 JP 2016162306
(43) Date of publication of application: 03.07.2019
(73) Proprietor: NGK SPARK PLUG CO., LTD., Nagoya-shi, Aichi 467-8525 (JP)
(72) Inventor: HANAWA, Yuichiro, Nagoya-shi Aichi 467-8525 (JP); MORI, Takashi, Nagoya-shi Aichi 467-8525 (JP); MATSUOKA, Toshiyuki, Nagoya-shi Aichi 467-8525 (JP); MIZUNO, Takuya, Nagoya-shi Aichi 467-8525 (JP)
(74) Representative: J A Kemp LLP
(86) International application number: PCT/JP2017/029847
(87) International publication number: WO 2018/038068

(56) References cited:
- WO-A1-2014/188817
- WO-A1-2016/017290
- JP-A- 2008 185 460
- JP-A- 2013 036 935
- US-A- 4 712 082
- US-A1- 2014 069 199
- US-A1- 2014 360 281
- US-B1- 6 236 095

## Description

The present invention relates to a strain sensor.

To date, a strain sensor in which a semiconductor element is joined to a metal diaphragm via a joining member is known. Japanese Patent Application Publication No. 61-217733 discloses a technology in which, in order to suppress breakage of a joining member (glass layer) and a semiconductor element (Si chip) that are joined onto a metal diaphragm (metal plate), materials that have approximately the same thermal expansion coefficients (specifically, from 2.0×10⁻⁶/°C to 6.0×10⁻⁶/°C (in the range of 20°C to 300°C)) is used as the materials of the metal diaphragm and the joining member. Japanese Patent Application Publication No. 2013-234955 discloses a strain sensor in which, in order to suppress occurrence of damage, such as a crack, in a joining member (joining glass) and a semiconductor element due to a large difference in thermal expansion coefficient between the joining member and a metal diaphragm (metal stem), a stress-absorbing member, which absorbs thermal stress caused by the difference in thermal expansion coefficient between the joining member and the metal diaphragm, is disposed on the outer periphery of the semiconductor element. As the stress absorbing member, a material whose thermal expansion coefficient is between those of the metal diaphragm and the semiconductor element (specifically, whose thermal expansion coefficient is from 49×10⁻⁷/°C to 69×10⁻⁷/°C (in the range of 20°C to 300°C)) is used.

JP 2013 234955 A, US 4712082 A, US 2014/360281 A1, and US 2014/069199 A1 disclose pressure sensors with commonly used membrane, glass solder and strain gauge configurations.

In recent years, a strain sensor needs to be used in a high-temperature environment of approximately 350°C. However, the strain sensors described in Japanese Patent Application Publication No. 61-217733 and Japanese Patent Application Publication No. 2013-234955 are not supposed to be used in such a high temperature environment. In particular, in the strain sensor described in Japanese Patent Application Publication No. 2013-234955, SUS430 is used as the metal material of the diaphragm. Because the strength of SUS430 is low at high temperatures, there is a problem in that the strain sensor cannot be used in a high-temperature environment of approximately 350°C.

The present invention, which has been made to solve the above problem, can be realized as the following embodiments.

(1) According to an embodiment of the present invention, provided is a strain sensor in which a semiconductor element, which is a strain gauge including silicon, is joined via glass onto a diaphragm made of a metal material. In the strain sensor, the metal material is a Ni-based heat-resistant alloy whose average linear expansion coefficient in a temperature range of 50°C to 350°C is 12.1 ppm/°C or higher and 21.2 ppm/°C or lower; the glass has a glass transition point higher than 350°C, and an average linear expansion coefficient of the glass in the temperature range is lower than an average linear expansion coefficient of the metal material in the temperature range and is higher than or equal to an average linear expansion coefficient of the semiconductor element in the temperature range; and a difference between the average linear expansion coefficient of the glass and the average linear expansion coefficient of the metal material is 3.3 ppm/°C or larger and 10.2 ppm/°C or smaller.

With the strain sensor, because a Ni-based heat-resistant alloy is used as the metal material and a material having a glass transition point of higher than 350°C (hereinafter, also referred to as a heat-resistant glass material) is used as the glass, the strain sensor can be used in a high-temperature environment of approximately 350°C.

With the strain sensor, the difference between the average linear expansion coefficient of the glass and the average linear expansion coefficient of the metal material is set to be 3.3 ppm/°C or larger. The inventors carefully examined the use of a Ni-based heat-resistant alloy as the metal material and the use of a heat-resistant glass material as the glass and found the following. To be specific, after joining a semiconductor element onto a diaphragm by using molten glass, when the glass is cooled, a residual compressive stress (residual compressive strain) corresponding to the difference between the average linear expansion coefficient of the glass and the average linear expansion coefficient of the metal material is generated in the glass. By setting the difference between the average linear expansion coefficient of the glass and the average linear expansion coefficient of the metal material to be 3.3 ppm/°C or larger, when the strain sensor is used in a high-temperature environment, even if the diaphragm extends and a tensile stress is applied to the glass due to the extension, because the tensile stress is offset by the residual compressive stress, an excessive tensile stress is not applied to the glass. As a result, the load resistance of the strain sensor is improved, because glass generally has a higher strength against a compressive stress than against a tensile stress. If the difference between the average linear expansion coefficient of the glass and the average linear expansion coefficient of the metal material is smaller than 3.3 ppm/°C, the above effect cannot be obtained.

With the strain sensor, the difference between the average linear expansion coefficient of the glass and the average linear expansion coefficient of the metal material is set to be 10.2 ppm/°C or smaller. Thus, after joining the semiconductor element onto the diaphragm by using molten glass, when the glass is cooled (that is, at room temperature (25°C)), excessive generation of a residual compressive stress (residual compressive strain) in the glass can be suppressed, and breakage of the glass at room temperature can be suppressed.

(2) In the strain sensor, in a state in which a maximum load under use conditions of the strain sensor is applied to the diaphragm in the temperature range, a strain that is generated in the glass located between the diaphragm and the semiconductor element may be a compressive strain.

With this structure, even in a state in which the maximum load is applied to the diaphragm in a high-temperature environment, the tensile stress applied to the glass is completely offset by the residual compressive stress, and only a compressive strain remains in the glass. Therefore, the load resistance of the strain sensor is further improved.

(3) In the strain sensor, the average linear expansion coefficient of the glass in the temperature range may be 6.3 ppm/°C or higher.
With this structure, the average linear expansion coefficient of the glass can be easily set to be higher than or equal to the average linear expansion coefficient of the semiconductor element.

[Fig. 1] Fig. 1 shows sectional views of a strain sensor according to an embodiment of the present invention.
[Fig. 2] Fig. 2 is table showing the results of a joining test related to a strain sensor.
[Fig. 3] Fig. 3 is a table showing examples of calculation of a strain applied to glass of a strain sensor.

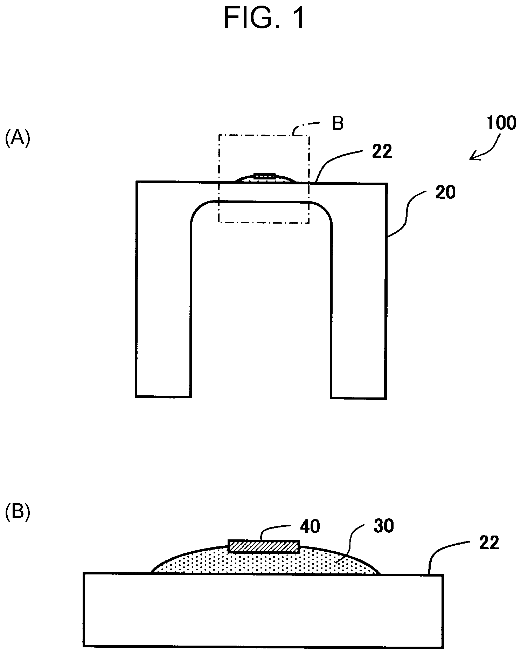

Fig. 1(A) is a sectional view of a strain sensor 100 according to an embodiment of the present invention, and Fig. 1(B) is an enlarged view of a portion B of Fig. 1(A). The strain sensor 100 includes a metal tubular body 20 having a bottom. The strain sensor 100 has a structure such that a semiconductor element 40 is joined via a glass 30 onto a diaphragm 22, which forms the bottom of the metal tubular body 20. The semiconductor element 40 is structured as a strain gauge including silicon. The strain sensor 100 has a function of measuring deformation (strain) of the diaphragm 22 by using the semiconductor element 40. The strain sensor 100 is manufactured by joining the semiconductor element 40 onto the diaphragm 22 by using molten glass and then cooling and solidifying the glass 30. The temperature at which the glass 30 solidifies when cooled (the solidification temperature of the glass) is, for example, in the range of approximately 460°C to 510°C, and is typically 505°C.

The use temperature range of the strain sensor 100 at least includes the temperature range of 50°C to 350°C. In particular, use of the strain sensor 100 at high temperatures (specifically, near 350°C) is taken into account. Therefore, the materials of the metal tubular body 20 and the glass 30 as described below are selected. As described below, as the materials of the metal tubular body 20, the glass 30, and the semiconductor element 40, materials whose linear expansion coefficients have a specific relationship are selected. The strain sensor 100 is structured so that breakage of the strain sensor 100 (in particular, the glass 30) does not easily occur when the strain sensor 100 is used in the temperature range of 50°C to 350°C.

As the metal material of the diaphragm 22, in consideration of use at high temperatures, a Ni-based heat-resistant alloy that can withstand a use temperature of 350°C is selected. As the Ni-based heat-resistant alloy, an alloy whose average linear expansion coefficient CTEm is 12.1 ppm/°C or higher and 21.2 ppm/°C or lower in the temperature range of 50°C to 350°C is selected. Preferably, the average linear expansion coefficient CTEm of the metal material is 12.2 ppm/°C or higher and 17.2 ppm/°C or lower. The lower limit (12.1 ppm/°C) and the upper limit (21.2 ppm/°C) of the average linear expansion coefficient CTEm of the metal material are adopted as a lower limit and an upper limit that can be realized with a Ni-based heat-resistant alloy. As the Ni-based heat-resistant alloy, for example, the following alloys can be used.

### <Example 1 of Ni-based heat-resistant alloy>

(1) Composition (weight%):
   Ni: 58.0 to 63.0%, Cr: 21.0 to 25.0%, Al: 1.0 to 1.7%, C: ≤ 0.10%, Si: ≤ 0.50%, Mn: ≤ 1.0%, S: ≤ 0.015%, Cu: ≤ 1.0%, Fe: remainder
(2) Average linear expansion coefficient CTEm in the temperature range of 50°C to 350°C:
   approximately 13.0 to approximately 15.0 ppm/°C

### <Example 2 of Ni-based heat-resistant alloy>

(1) Composition (weight%):
   Cr: 18.00 to 21.00%, B: 0.003 to 0.01%, Zr: 0.02 to 0.12%, Al: 1.20 to 1.60%, Ti: 2.75 to 3.25%, Mo: 3.50 to 5.00%, Co: 12.00 to 15.00%, Cu: ≤ 0.50%, Fe: ≤ 2.00%, S: ≤ 0.030%, Si: ≤ 0.75%, Mn: ≤ 1.00%, C: ≤ 0.10%, P: ≤ 0.030%, Ni: remainder
(2) Average linear expansion coefficient CTEm in the temperature range of 50°C to 350°C:
   approximately 12.2 to approximately 13.5 ppm/°C

### <Example 3 of Ni-based heat-resistant alloy>

(1) Composition (weight%):
   Ni: 24.0 to 27.0%, Cr: 13.5 to 16.0%, Ti: 1.90 to 2.35%, Mo: 1.0 to 1.5%, V: 0.10 to 0.50%, C: ≤ 0.08%, Mn: ≤ 2.0%, Si: ≤ 1.0%, Al: ≤ 0.35%, S: ≤ 0.030%, B: 0.001 to 0.01%, Fe: remainder
(2) Average linear expansion coefficient CTEm in the temperature range of 50°C to 350°C:
   approximately 16.0 to approximately 17.2 ppm/°C

### <Example 4 of Ni-based heat-resistant alloy>

(1) Composition (weight%):
   Ni: ≥ 58.0%, Cr: 20.0 to 23.00%, C: ≤ 0.10%, Fe: ≤ 5.0%, Si: ≤ 0.50%, Mn: ≤ 0.50%, S: ≤ 0.015%, Al: ≤ 0.40%, Ti: ≤ 0.40%, P: 0.015%, Mo: 8.0 to 10.0%
(2) Average linear expansion coefficient CTEm in the temperature range of 50°C to 350°C:
   approximately 12.8 to approximately 13.5 ppm/°C

Considering the value of the average linear expansion coefficient CTEm of a typical Ni-based heat-resistant alloy in the temperature range of 50°C to 350°C, the average linear expansion coefficient CTEm of the metal material may be in the range of 12.2 ppm/°C to 17.2 ppm/°C.

As the material of the glass 30, a glass material having the following properties is selected: the average linear expansion coefficient CTEg of the glass material in the temperature range of 50°C to 350°C is lower than the average linear expansion coefficient CTEm of the metal material and is higher than or equal to the average linear expansion coefficient CTEs of the semiconductor element 40 (described below) in the temperature range of 50°C to 350°C; and the glass material has a glass transition point of 350°C or higher, in consideration of use at high temperatures. The average linear expansion coefficient CTEg of the glass 30 may be 6.3 ppm/°C. In this case, the average linear expansion coefficient CTEg can be easily set to be higher than or equal to the average linear expansion coefficient of the semiconductor element. Glasses of various types can be used as such the glass material. For example, inorganic glasses, such as leaded-free glass and lead glass, can be used. In order to adjust the average linear expansion coefficient CTEg of the glass 30, a filler that is made from powder that does not cause a chemical reaction with a glass component may be mixed into the glass material as necessary. As such a filler, various oxides, such as cordierite and silica, can be used.

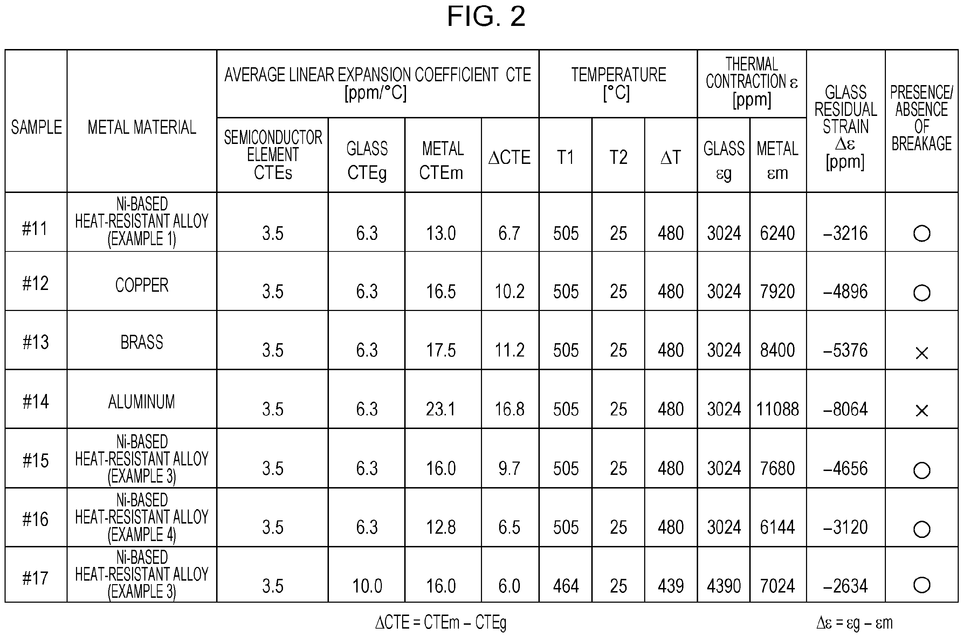

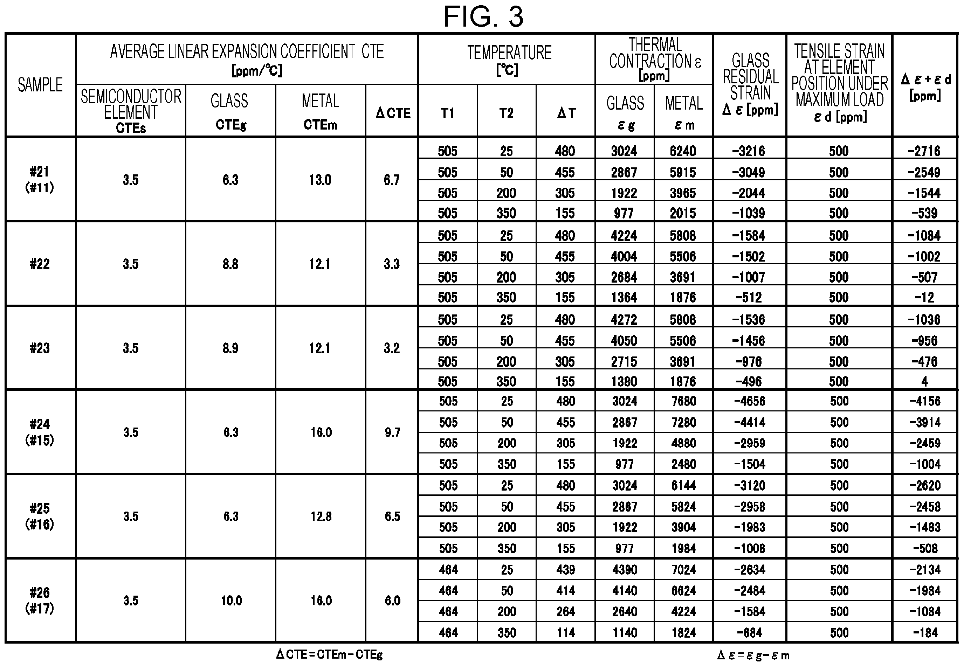

The difference between the average linear expansion coefficient CTEg of the glass 30 and the average linear expansion coefficient CTEm of the metal material is set to be 3.3 ppm/°C or larger. After joining the semiconductor element 40 onto the diaphragm 22 by using molten glass, when the glass 30 is cooled to room temperature (about 25°C), a residual compressive stress (residual compressive strain) corresponding to the difference (CTEg - CTEm) between the average linear expansion coefficient CTEg of the glass 30 and the average linear expansion coefficient CTEm of the metal material is generated in the glass 30. By setting the difference between the average linear expansion coefficient of the glass 30 and the average linear expansion coefficient of the metal material to be 3.3 ppm/°C or larger, when the strain sensor 100 is used in a high-temperature environment, even if the temperature of the strain sensor 100 increases, the diaphragm 22 expands, and a tensile stress is applied to the glass 30 due to the expansion, the tensile stress is offset by the residual compressive stress, and thereby a large tensile stress is not generated in the glass 30. In general, the glass 30 tends to be highly resistant to a compressive stress but less resistant to a tensile stress. Accordingly, the load resistance of the strain sensor 100 under the environment of 50°C to 350°C can be improved. In this sense, the difference (CTEm - CTEg) between the average linear expansion coefficients of the metal material of the diaphragm 22 and the glass 30 is preferably large. Preferably, the difference between the average linear expansion coefficient of the glass 30 and the average linear expansion coefficient of the metal material is set to be - 3.3 ppm/°C or larger. The lower limit (3.3 ppm/°C) is determined in consideration of test results shown in Fig. 3 and described below. However, the difference (CTEm - CTEg) between the average linear expansion coefficient of the glass 30 and the average linear expansion coefficient of the metal material is set to be 10.2 ppm/°C or smaller. If the difference between the average linear expansion coefficients of the glass and the metal member is excessively large, after joining the semiconductor element 40 onto the diaphragm 22 by using molten glass, when the glass is cooled (at room temperature), an excessive residual compressive stress is generated in the glass 30, and the glass 30 may break. In consideration of this point, preferably, the difference (CTEm - CTEg) between the average linear expansion coefficient of the metal material and the average linear expansion coefficient of the glass 30 is set to be 10.2 ppm/°C or smaller. The upper limit (10.2 ppm/°C) is determined in consideration of test results shown in Fig. 2 and described below.

The semiconductor element 40 is an element including silicon. As the semiconductor element 40, an element whose average linear expansion coefficient CTEs in the temperature range of 50°C to 350°C is lower than or equal to the average linear expansion coefficient CTEg of the glass 30 is selected. In a case where the semiconductor element 40 is made from a silicon chip, the average linear expansion coefficient CTEs of the silicon chip is approximately the same as that of Si, which is from approximately 3.0 to approximately 3.5 ppm. The average linear expansion coefficient CTEs of the semiconductor element 40 is set to be lower than or equal to the average linear expansion coefficient CTEg of the glass 30 for the following reason: if, conversely, CTEg < CTEs, the semiconductor element 40 would expand more than the glass 30 during use at high temperatures, and therefore the compressive stress of the glass 30 would be reduced and the load resistance would be reduced.

Furthermore, preferably, the materials of the diaphragm 22, the glass 30, and the semiconductor element 40 are selected so as to satisfy the following: in a state in which the maximum load is applied to the diaphragm 22 (in a state in which the maximum pressure in the use pressure range of the strain sensor 100 is applied to the strain sensor 100) in the temperature range of 50°C to 350°C, a strain that is generated in the glass 30 located between the diaphragm 22 and the semiconductor element 40 is a compressive strain. The maximum load of the diaphragm 22 under the use conditions of the strain sensor 100 is set for each model number of the strain sensor 100 in accordance the intended use of the strain sensor 100. Note that the strain sensor 100 is usually used under a condition such that a higher pressure is applied to the inside of the metal tubular body 20 than to the outside of the metal tubular body 20. By selecting the materials as described above, even in a state in which the maximum load is applied to the diaphragm 22, because the tensile stress applied to the glass 30 is completely offset by the residual compressive stress and only a compressive strain remains in the glass 30, the load resistance of the strain sensor 100 can be further improved.

Fig. 2 shows the results of a joining test related to a plurality of samples of the strain sensors 100 of various types. Among seven samples #11 to #17, six samples #11 to #16 were the same as each other in the semiconductor element 40 and the glass 30, but differed from each other in the metal material of the diaphragm 22. That is, as the metal material of the diaphragm 22 of sample #11, the example 1 of Ni-based heat-resistant alloy described above (CTEm = 13.0 ppm/°C) was used. As the metal material of the diaphragm 22, copper (CTEm = 16.5 ppm/°C) was used in sample #12, brass (CTEm = 17.5 ppm/°C) was used in sample #13, and aluminum (CTEm = 23.1 ppm/°C) was used in sample #14. As the metal material of the diaphragm 22, the example 3 of Ni-based heat-resistant alloy described above (CTEm = 16.0 ppm/°C) was used in sample #15, and the example 4 of Ni-based heat-resistant alloy described above (CTEm = 12.8 ppm/°C) was used in sample #16. The average linear expansion coefficient CTEs of the semiconductor element 40 was 3.5 ppm/°C. The average linear expansion coefficient CTEg of the glass 30 was 6.3 ppm/°C. Because the solidification temperature T1 of the glass 30 was approximately 505°C, the temperature difference ΔT between the solidification temperature and room temperature (about 25°C), which was the evaluation temperature T2, was 480°C.

Sample #17 was the same as sample #15 in the semiconductor element 40 and the metal material of the diaphragm 22, but differed from sample #15 in the glass 30. Namely, as the metal material of the diaphragm 22 of sample #17, the example 3 of Ni-based heat-resistant alloy described above (CTEm = 16.0 ppm/°C) was used. The average linear expansion coefficient CTEs of the semiconductor element 40 was 3.5 ppm/°C. The average linear expansion coefficient CTEg of the glass 30 was 10.0 ppm/°C. Because the solidification temperature T1 of the glass 30 was approximately 464°C, the temperature difference ΔT between the solidification temperature and room temperature (about 25°C), which was the evaluation temperature T2, was 439°C.

The values of the thermal contraction εg of the glass 30 and the thermal contraction εm of the metal material shown in Fig. 2 are those in a case where each sample was cooled from the solidification temperature T1 of the glass 30 to room temperature, which was the evaluation temperature T2. The values were calculated by multiplying the average linear expansion coefficients CTEg and CTEm of each sample by the temperature difference ΔT (= 439°C, 480°C). Although the values of the average linear expansion coefficients CTEg and CTEm are those in the temperature range of 50°C to 350°C and slightly differ from the average linear expansion coefficients in the temperature range (of 25°C to 505°C) that is used in Fig. 2, because there are not significant differences between these, the effect on the conclusion is negligible.

The glass residual strain Δε is the difference between the thermal contraction εg of the glass 30 and the thermal contraction εm of the metal material. A negative value of the glass residual strain Δε implies that a compressive strain exists in the glass 30, and a positive value of the glass residual strain Δε implies that a tensile strain exists in the glass 30. In the example shown in Fig. 2, the absolute value of the glass residual strain Δε increases in order of samples #11, #12, #13, and #14, which shows that a larger compressive strain was generated.

In the joining test of each of these samples #11 to #17, the semiconductor element 40 was joined onto the diaphragm 22 by using molten glass, the sample was cooled to room temperature, and whether breakage occurred in the glass 30 was visually checked. In samples #11, #12, #15, #16, and #17, breakage (such as a crack) did not occur in the glass 30; and, in samples #13 and #14, breakage occurred in the glass 30 (see the right end column of Fig. 2). From the test results, it is considered that, if the difference (CTEm - CTEg) between the average linear expansion coefficients of the metal material and the glass 30 is larger than 10.2 ppm/°C, an excessively large compressive strain may be generated in the glass 30 during use of the strain sensor 100 at room temperature and the glass 30 may break. Accordingly, the difference (CTEm - CTEg) between the average linear expansion coefficient of the metal material and the glass 30 is set to be 10.2 ppm/°C. In sample #12, although the relationship among the average linear expansion coefficients CTEs, CTEg, and CTEm is in a preferable range, because copper is used as the metal material, the sample #12 cannot be repeatedly used in a high-temperature environment of approximately 350°C. Accordingly, as the metal material of the diaphragm 22, a Ni-based heat-resistant alloy as in any of samples #11, #15, #16, and #17 is used.

Fig. 3 is a table showing examples of calculation of a strain applied to the glass 30 of the strain sensor 100. Six samples #21 to #26 differ from each other in the average linear expansion coefficients of the glass 30 and the metal material. Sample #21 was the same as sample #11 of Fig. 2, the average linear expansion coefficient CTEg of the glass 30 was 6.3 ppm/°C, and the average linear expansion coefficient CTEm of the metal material was 13.0 ppm/°C. Sample #22 was a sample in which the average linear expansion coefficient CTEg of the glass 30 was 8.8 ppm/°C and the average linear expansion coefficient CTEm of the metal material was 12.1 ppm/°C. The value (12.1 ppm/°C) of the average linear expansion coefficient CTEm of the metal material in sample #22 was adopted as the lower limit that could be realized by a Ni-based heat-resistant alloy. Sample #23 was a sample in which the average linear expansion coefficient CTEg of the glass 30 of sample #22 was changed to 8.9 ppm/°C. Sample #24 was the same as sample #15 of Fig. 2, the average linear expansion coefficient CTEg of the glass 30 was 6.3 ppm/°C, and the average linear expansion coefficient CTEm of the metal material was 16.0 ppm/°C. Sample #25 was the same as sample #16 of Fig. 2, the average linear expansion coefficient CTEg of the glass 30 was 6.3 ppm/°C, and the average linear expansion coefficient CTEm of the metal material was 12.8 ppm/°C. Sample #26 was the same as sample #17 of Fig. 2, the average linear expansion coefficient CTEg of the glass 30 was 10.0 ppm/°C, and the average linear expansion coefficient CTEm of the metal material was 16.0 ppm/°C.

In Fig. 3, the solidification temperature T1 of the glass 30 of each of samples #21 to sample #25 was approximately 505°C, and the solidification temperature T1 of the glass 30 of sample #26 was approximately 464°C. By using the temperature difference ΔT between the solidification temperature T1 and each of a plurality of evaluation temperatures T2, the strain of the glass 30 at each evaluation temperature T2 was calculated as follows.

The values of the thermal contraction εg of the glass 30 and the thermal contraction εm of the metal material were calculated by multiplying the average linear expansion coefficients CTEg and CTEm of each sample by the temperature difference ΔT. Note that, as described above with reference to Fig. 2, the values of the average linear expansion coefficients CTEg and CTEm are those in the temperature range of 50°C to 350°C, and differ from the average linear expansion coefficients in the temperature range (of 25°C to 505°C) used in Fig. 3. However, because there are not significant differences between these, the effect on the conclusion is negligible.

The glass residual strain Δε is the difference between the thermal contraction εg of the glass 30 and the thermal contraction εm of the metal material. A negative value of the glass residual strain Δε implies that a compressive strain exists in the glass 30. In the example shown in Fig. 3, the glass residual strain Δε of each of samples #21 to #26 at the evaluation temperature T2 from 25°C to 350°C was negative, which shows that a compressive strain was generated in the glass 30. As the evaluation temperature T2 decreased, the compressive strain Δε of the glass 30 increased.

The tensile strain εd at the element position under the maximum load is a tensile strain that is generated in the diaphragm 22 in a state in which the maximum load under the use conditions of the strain sensor 100 is applied to the diaphragm 22. Here, it is assumed that, for example, εd = 500 ppm.

The sum (Δε + εd) of the tensile strain εd at the element position under the maximum load and the glass residual strain Δε represents a strain that is generated in the glass 30 located between the diaphragm 22 and the semiconductor element 40 under the maximum load. If the strain (Δε + εd) is negative, a compressive strain remains in the glass 30, and a tensile strain is not generated even under the maximum load. Therefore, the glass 30 does not easily break, and the load resistance of the strain sensor 100 is improved. In the example shown in Fig. 3, in samples #21, #22, #24, #25, and #26, the strain (Δε + εd) of the glass 30 was negative in the temperature range of 25°C to 350°C, and a compressive strain was constantly present. In sample #23, the strain (Δε + εd) of the glass 30 at 350°C was positive, and a tensile strain was generated.

Preferably, the strain sensor 100 has sufficiently high load resistance in the ranges of the use conditions thereof (in the use temperature range and the use pressure range). To be specific, preferably, in a state in which the maximum load is applied to the diaphragm 22 in the temperature range of 50°C to 350°C, the strain (Δε + εd) that is generated in the glass 30 located between the diaphragm 22 and the semiconductor element 40 is a compressive strain. Therefore, from the results shown in Fig. 3, the difference ΔCTE = (CTEm - CTEg) between the average linear expansion coefficients of the metal material and the glass 30 is set to be 3.3 ppm/°C or larger. For example, in a case where, as in samples #22 and #23, the lower limit (12.1 ppm/°C) that can be realized by a Ni-based heat-resistant alloy is adopted as the average linear expansion coefficient CTEm of the metal material, preferably, the average linear expansion coefficient CTEg of the glass 30 is set to be 8.8 ppm/°C or lower. Also in a case where a value that is not 12.1 ppm/°C is adopted as the lower limit of the average linear expansion coefficient CTEm of the metal material, the difference ΔCTE = (CTEm - CTEg) between the average linear expansion coefficients of the metal material and the glass 30 is set to be 3.3 ppm/°C or larger.

However, even in a case where the strain (Δε + εd) under the maximum load is a tensile strain, if the tensile strain |Δε + εd| is sufficiently small, the glass 30 is not likely to break, and the tensile strain may not cause a problem in practice. In this case, the allowable tensile strain |Δε + εd| under the maximum load may be set, for example, to be 500 ppm or smaller.

### Reference Signs List

- 20: metal tubular body
- 22: diaphragm
- 30: glass
- 40: semiconductor element

- 100: strain sensor

## Claims

1. A strain sensor (100) in which a semiconductor element (40), which is a strain gauge including silicon, is joined via glass (30) onto a diaphragm (22) made of a metal material,
**characterized in that** the metal material is a Ni-based heat-resistant alloy whose average linear expansion coefficient (CTEm) in a temperature range of 50°C to 350°C is 12.1 ppm/°C or higher and 21.2 ppm/°C or lower,
wherein the glass (30) has a glass transition point higher than 350°C, and an average linear expansion coefficient (CTEg) of the glass (30) in the temperature range is lower than an average linear expansion coefficient (CTEm) of the metal material in the temperature range and is higher than or equal to an average linear expansion coefficient (CTEs) of the semiconductor element (40) in the temperature range, and
wherein a difference (ΔCTE) between the average linear expansion coefficient (CTEg) of the glass (30) and the average linear expansion coefficient (CTEm) of the metal material is 3.3 ppm/°C or larger and 10.2 ppm/°C or smaller.

2. The strain sensor (100) according to Claim 1,
wherein the metal material and the glass (30) are selected so as to satisfy the following: a glass residual strain, Δε, is less than -500 ppm at a use temperature of 350°C, wherein Δε=εg-εm, where εg is the thermal contraction ε of the glass (30) and εm is the thermal contraction of the metal material.

3. The strain sensor (100) according to Claim 1 or 2, wherein the average linear expansion coefficient (CTEg) of the glass (30) in the temperature range is 6.3 ppm/°C or higher.

## Patentansprüche

1. Dehnungssensor (100), bei dem ein Halbleiterelement (40), das ein Dehnungsmessstreifen ist, der Silizium umfasst, mittels Glas (30) mit einer Membran (22) aus einem Metallmaterial verbunden ist,
**dadurch gekennzeichnet, dass** das Metallmaterial eine hitzebeständige Legierung auf Ni-Basis ist, deren durchschnittlicher linearer Ausdehnungskoeffizient (CTEm) in einem Temperaturbereich von 50 °C bis 350 °C 12,1 ppm/°C oder mehr und 21,2 ppm/°C oder weniger beträgt,
wobei das Glas (30) einen Glasübergangspunkt von mehr als 350 °C aufweist, und ein durchschnittlicher linearer Ausdehnungskoeffizient (CTEg) des Glases (30) in dem Temperaturbereich niedriger ist als ein durchschnittlicher linearer Ausdehnungskoeffizient (CTEm) des Metallmaterials in dem Temperaturbereich und höher oder gleich einem durchschnittlichen linearen Ausdehnungskoeffizienten (CTEs) des Halbleiterelements (40) in dem Temperaturbereich ist, und
wobei eine Differenz (ΔCTE) zwischen dem durchschnittlichen linearen Ausdehnungskoeffizienten (CTEg) des Glases (30) und dem durchschnittlichen linearen Ausdehnungskoeffizienten (CTEm) des Metallmaterials 3,3 ppm/°C oder mehr und 10,2 ppm/°C oder weniger beträgt.

2. Dehnungssensor (100) nach Anspruch 1, wobei das Metallmaterial und das Glas (30) dafür ausgewählt sind, Folgendes zu erfüllen: eine Glasrestdehnung Δε beträgt weniger als -500 ppm bei einer Verwendungstemperatur von 350 °C, wobei Δε = εg - εm, wobei εg die Wärmekontraktion ε des Glases (30) und εm die Wärmekontraktion des Metallmaterials ist.

3. Dehnungssensor (100) nach Anspruch 1 oder 2, wobei der durchschnittliche lineare Ausdehnungskoeffizient (CTEg) des Glases (30) in dem Temperaturbereich 6,3 ppm/°C oder mehr beträgt.

## Revendications

1. Capteur de contrainte (100) dans lequel un élément semi-conducteur (40), qui est une jauge de contrainte comprenant du silicium, est assemblé via du verre (30) sur un diaphragme (22) en un matériau métallique,
**caractérisé en ce que** le matériau métallique est un alliage résistant à la chaleur à base de Ni dont le coefficient de dilatation linéaire moyen (CTEm) dans une plage de température de 50 °C à 350 °C est de 12,1 ppm/°C ou plus et de 21,2 ppm/ °C ou moins,
dans lequel le verre (30) a un point de transition vitreuse supérieur à 350 °C, et un coefficient de dilatation linéaire moyen (CTEg) du verre (30) dans la plage de température est inférieur au coefficient de dilatation linéaire moyen (CTEm) du matériau métallique à la plage de température et est supérieur ou égal à un coefficient de dilatation linéaire moyen (CTE) de l'élément semi-conducteur (40) dans la plage de température, et
dans lequel une différence (ΔCTE) entre le coefficient de dilatation linéaire moyen (CTEg) du verre (30) et le coefficient de dilatation linéaire moyen (CTEm) du matériau métallique est de 3,3 ppm/°C ou plus et 10,2 ppm/°C ou moins.

2. Capteur de contrainte (100) selon la revendication 1, dans lequel le matériau métallique et le verre (30) sont choisis de manière à satisfaire ce qui suit : une contrainte résiduelle du verre, Δε, est inférieure à -500 ppm à une température d'utilisation de 350 °C, dans lequel Δε = εg - εm, où εg est la contraction thermique ε du verre (30) et εm est la contraction thermique du matériau métallique.

3. Capteur de contrainte (100) selon la revendication 1 ou 2, dans lequel le coefficient de dilatation linéaire moyen (CTEg) du verre (30) dans la plage de température est de 6,3 ppm/°C ou plus.
